Europäisches Patentamt

European Patent Office

Office européen des brevets

(19)

(11) Numéro de publication: **0 036 803**
**B1**

(12) **FASCICULE DE BREVET EUROPEEN**

(45) Date de publication du fascicule du brevet: **31.10.84**

(21) Numéro de dépôt: **81400385.1**

(22) Date de dépôt: **13.03.81**

(51) Int. Cl.³: **G 01 C 3/00, G 08 G 5/06**

(54) **Appareil de contrôle de positionnement.**

(30) Priorité: **19.03.80 FR 8006127**

(43) Date de publication de la demande:
**30.09.81 Bulletin 81/39**

(45) Mention de la délivrance du brevet:
**31.10.84 Bulletin 84/44**

(84) Etats contractants désignés:
**AT BE CH DE GB IT LI LU NL SE**

(56) Documents cités:
**US-A-3 663 105**
**US-A-3 674 226**
**US-A-3 690 599**
**US-A-3 729 262**
**US-A-3 775 741**

(73) Titulaire: **SOCIETE D'OPTIQUE, PRECISION ELECTRONIQUE ET MECANIQUE - SOPELEM**
**102 rue Chaptal**
**F-92300 Levallois-Perret (FR)**

(72) Inventeur: **Saint-Sevin, Michel**
**1 bis, rue des 3 Soeurs**
**F-93220 Gagny (FR)**
Inventeur: **Blot, Michel**
**19, rue Jean Jaurès**
**La Norville F-91290 Arpajon (FR)**
Inventeur: **Moirez, Jacques**
**8, rue Emile Deslandre**
**F-75013 Paris (FR)**

(74) Mandataire: **Le Brusque, Maurice et al**
**CREUSOT-LOIRE 15 rue Pasquier**
**F-75383 Paris Cedex 08 (FR)**

Courier Press, Leamington Spa, England.

EP 0 036 803 B1

# Description

L'invention a pour objet un appareil de contrôle du positionnement d'un avion dans un plan en un point de stationnement P situé à une distance (d) d'un point de repère fixe O suivant une ligne d'approche passant par P et O.

L'invention s'applique spécialement au positionnement d'un avion sur une aire de stationnement.

Dans les aéroports, il est nécessaire de placer les avions en des points de stationnement bien déterminés. C'est le cas notamment lorsque l'aérogare comporte des satellites équipées de passerelles télescopiques qui viennent se placer contre la porte de l'avion. En effet, même s'il est possible de règler la position de l'extrémité de la passerelle ceci ne peut-être fait que dans des limites assez étroites. D'autre part, on place souvent plusieurs avions autour d'un même satéllite et dans de cas, il est bien évident que les positions de stationnement des avions doiventêtre respectées avec beaucoup de précision.

Jusqu'à présent pour guider les pilotes jusqu'à leur point de stationnement, on a utilisé des méthodes très simples mais relativement imprécises.

L'une de ces méthodes couramment utilisées consistent à guider l'avion le long d'une ligne d'approche jusqu'au point de stationnement qui est indiqué au pilote par un moyen de repérage. Par exemple, la ligne d'aproche est une droite passant par le point de stationnement (P) et par un point de repérage (O), et qui peut être matérialisée soit sur le sol, soit par l'alignement de deux écartés l'un de l'autre, par exemple des feux. Le pilote se maintient sur cette ligne en observant l'alignement et s'arrête lorsqu'un second alignement lui indique qu'il est arrivé au point de stationnement. Par conséquent, le pilote doit regarder dans deux directions, ce qui est assez gênant. D'autre part, les deux alignements sont matérialisés par des repères qui, normalement, ne peuvent être très éloignés les uns des autres et par conséquent l'alignement donnant la position de stationnement fait un angle assez faible avec la ligne d'approche. Il en résulte qu'une erreur d'appréciation du pilote peut se traduire par un écart assez important par rapport à la position de stationnement (P) fixée (US—A—3.674.226 et 3.775.741).

Dans un autre dispositif, décrit dans le Brevet US—A—3.690.599, la ligne d'approche est matérialisée par miroir dans lequel le pilote observe les images de plusieurs points de repères placés sur l'avion et espacés longitudinalement. Le positionnement en distance est obtenu par des contacts électriques incorporés à l'aire de stationnement et actionnant un signal placé à côté du miroir.

De tels contacts électriques peuvent être sujets à des pannes et, en outre, un tel dispositif ne peut convenir qu'à un seul type d'appareil à moins d'équiper l'aire de stationnement de plusieurs contacts positionnés en fonction des dimensions de chaque type d'avion.

L'invention a pour objet un appareil purement optique qui, sans être exagérément encombrant ni couteux, permet au pilote de positionner son appareil sans avir à tourner la tête pour vérifier la distance. En outre, l'appareil selon l'invention permet de modifier facilement la distance d'arrêt pour s'adapter à différents types d'avions.

L'appareil de contrôle conforme à l'invention comprend un dispositif de reflexion optique placé sur la ligne d'approche et formant dans l'oeil du pilote l'image d'un point de repère placé sur l'avion, appariel caractérisée par une glace semi-transparente dont le centre est un point de repère fixe O interposee sur le trajet des rayons lumineux allant de l'oeil du pilote au dispositif de réflexion et faisant un angle de 45° avec le plan vertical passant par la ligne d'approche et un miroir-plan formant dans l'oeil du pilote un deuxième image du point de repère de l'avion après réflexion des rayons lumineux sur ledit miroir-plan, la glace semi-transparente et le dispositif de réflexion, le miroir-plan faisant avec la glace semi-transparente un angle A telles que les deux images du point de repère soient confondues lorsque le point de repère se trouve à la verticale du point de stationnement P.

De préférence, le miroir plan est monté orientable autour d'un axe perpendiculaire au plan de déplacement du pilote et est associé à un dispositif d'orientation permettant, par variation de l'angle A de règler la distance (d) du point de stationnement P au point de repérage O.

L'invention va maintenant être décrite en se référant à un mode de réalisation particulier et à des variantes données à titre d'exemple et représentées sur les dessins annexés.

La figure 1 est une vue très schématique en perspective, d'une aire de stationnement d'avion équipée d'un dispositif selon l'invention.

Les figures 2, 3 et 4 représentent respectivement un schéma optique et deux variantes du dispositif.

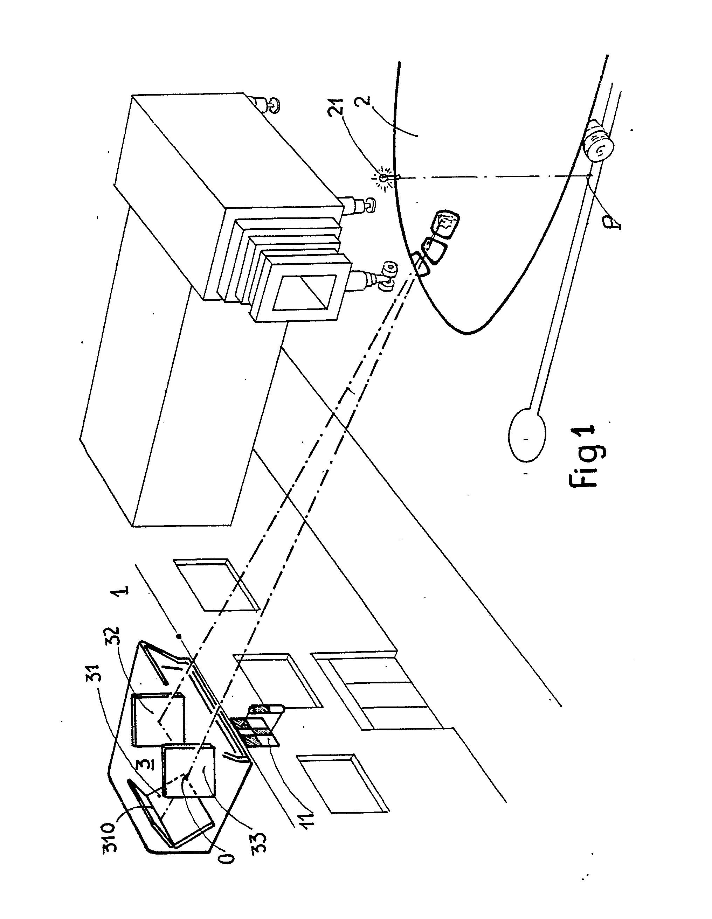

Sur la figure 1, on a représenté schématiquement un satellite 1 d'aérogare auprès duquel doit venir se positionner un avion 2.

D'un façon classique, l'avion s'approche du point de stationnement en se maintenant le long d'une ligne d'approche matérialisée par exemple par une mire.

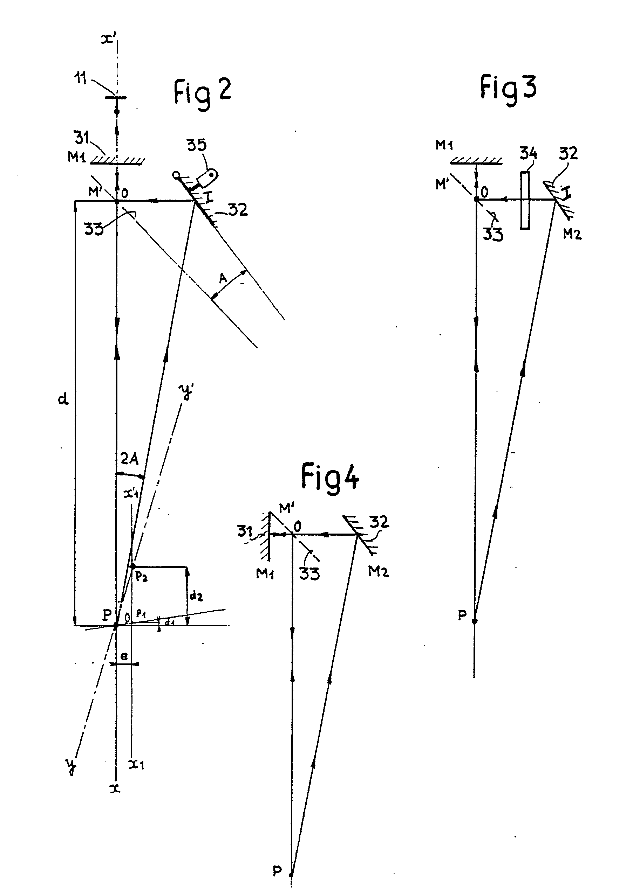

L'appareil de contrôle selon l'invention se compose d'un ensemble optique 3, qui est placé sur le satellite 1 et dont le fonctionnement est représenté schématiquement sur les figures 2, 3 et 4.

Dans le mode de réalisation représenté, l'appareil se compose de deux miroirs 31, 32 et d'une glace semi-transparente 33. Le centre de la glace 33 sert de point de repérage O car c'est

par rapport à lui que sont effectués les mesures de distance.

Le point P de stationnement est placé à une distance (d) du point O. La mire 11 matérialise la ligne d'approche qui est située dans le plan vertical passant par les points O et P.

Le miroir 31, dans le cas des figures 2 et 3 est perpendiculaire à la droite OP. Par conséquent, il renvoie sur eux-mêmes les rayons venant de l'oeil de l'observateur et ayant traversé la glace semi-transparente 33 qui fait un angle de 45° acec la ligne P O et par conséquent avec le miroir 31.

Le miroir 32 fait un angle A avec la glace 33.

Ce système donne d'un observateur se déplaçant suivant l'axe xx' passant par les points P et O et perpendiculaire au miroir 31 deux images de lui-même dont l'écart apparent est fonction de la distance de l'observateur au miroir 31. La première de ces deux images est donnée par le miroir 31, la deuxième étant le résultat des trois réflexions sur le miroir 32, la glace semi-transparente 33 et le miroir 31.

L'angle A est choisi de telle sorte que les deux images paraissent confondues pour l'observateur se trouvant au point P. Dans ce cas, comme on l'a représenté sur la figure, les rayons rencontrant la glace 33 au point O, soit directement suivant le droite x'x soit après réflexion sur le miroir 32 font entre eux un angle 2A.

Un observateur se déplaçant le long de xx' voit donc les deux images de lui-même se rapprocher l'une de l'autre au fur et à mesure qu'il se rapproche du point P pour lequel les images lui apparaissent confondues.

Un tel système renseigne donc l'observateur à la fois sur la distance au point P par l'appréciation de l'écart entre les deux images et sur la vitesse de rapprochement à ce même point P par l'appréciation de la vitesse de variation de cet écart. Le positionnement peut-être fait avec une grande précision si le pilote prend soin de faire coïncider les images de points particuliers comme par exemple un feu clignotant 21 placé sur l'avion.

La distance d'arrêt d = OP peut être règlée en faisant varier l'angle A au moyen d'un dispositif étalonné 35 qui fait tourner le miroir 32 autour d'un axe vertical.

On notera qu'un écart (e) par rapport à la ligne d'approche (xx') se traduit dans le système de l'invention par une erreur (d1) moins grande sur la distance (d) à repecter. On peut montrer en effet, que (d1 = etg A) et donc que la distance d'arrêt (d) est faiblement influencée par la précision latérale (e) (figure 2) de la trajectoire suivie par l'avion dans le cas où A est petit. Sur la figure 2, on voit que si l'observateur s'approche selon la ligne (x₁x'₁), il va s'arrêter en P1, l'erreur (d1) sur la distance d'arrêt étant assez faible. Au contraire, si par exemple le point de stationnement P avait été défini par un alignement (yy') l'avion se setait arrêté en P2, l'erreur (d2) étant beaucoup plus importante. En effet, en pratique il est difficile de définir des alignements transversaux donnant une bonne précision d'arrêt et qui en outre obligent le pilote à tourner sensiblement la tête pour les observer.

Pour faciliter la superposition des deux images, il est préférable, comme on l'a représenté sur la figure 3 de placer un filtre coloré 34 sur le trajet entre le point O de la glace 33 et le point I d'incidence sur le miroir 32. Cependant, on peut à cet effect, utiliser d'autres systèmes connus. Par exemple, il est possible de basculer le miroir 32 en l'inclinant légérement par rapport à la verticale. Ainsi, on donne un léger décalage en hauteur entre les deux images données par le système et il est plus facile d'aligner les deux images que d'en réaliser la coïncidence.

Comme on l'a indiqué plus haut, le pilote peut s'observer lui-même ou bien choisir un point de repère 21 sur l'avion, qu'il placera à la verticale du point de stationnement P.

Il suffit en effet de choisir le point de repère 21 et de dimensionner l'ensemble optique de façon telle que les deux images du point de repère viennent se superposer dans l'oeil du pilote.

D'ailleurs, l'invention ne se limite évidemment pas aux détails du mode de réalisation qui vient d'être décrit car on pourrait imaginer des variantes en utilisant des moyens équivalents.

A titre d'exemple, sur la figure 4, on a montré un autre disposition du miroir 31 qui, dans ce cas, est parallèle à la ligne d'approche PO. L'in portant est en effet que le miroir 31 renvoie sur eux-mêmes les rayons ayant rencontré la glace semi-transparente 33 au point O, et il suffit pour cela qu'ils fassent un angle de 45° avec la face réfléchissante de la glace 33 qui, dans ce cas, est traversée sans réflexion par les rayons rencontrant le miroir 32.

Pour que le même système soit utilisable par des avoins de taille très différente, on pourrait être obligé de donner au miroir des dimensions trop importantes. C'est pourquoi, comme on l'a représenté sur la figure 1, il peut être intéressant de remplacer le miroir 31 par un dièdre à 90° 310 ayant son arête horizontale et orientée à 45° par rapport à la glace 33. On sait en effet, qu'un tel dièdre est un invariant optique qui renvoie dans un direction parallèle à eux-mêmes tous les rayons se trouvant placés dans un plan perpendiculaire à son arête. Ainsi l'observateur pourrait se trouver placé au-dessus ou en-dessous du système et il verrait les deux images se former l'une au-dessus de l'autre comme dans le cas exposé précédemment.

On voit que grâce au système selon l'invention le pilote de l'avion se trouve à tout moment renseignè sur sa distance au point d'arrêt sans avoir besoin de tourner la tête, les deux images apparaîssant en face de lui.

On notera que l'appareil peut également être utilisé d'une générale, pour guider le pilote

5

**0 036 803**

6

suivant une trajectoire rectiligne. Il suffit pour cela de tracer un repère sur le miroir 31 dans le plan vertical passant par la ligne d'approche PO. Le pilote aligne alors l'image donnée par le miroir avec ce repère en même temps qu'il observe la distance entre les deux images données par le système.

Si l'appareil a été mis au point le positionnement des avions sur les aires de stationnement, il est évident qu'il pourrait aussi être utilisé dans d'autres applications et, d'une façon générale, chaque fois que l'on doit placer un mobile soit en un point déterminé le long d'une ligne d'approche déterminée.

**Revendications**

1. Appareil pour le contrôle du positionnement d'un avion dans un plan, en un point de stationnement P situé à une distance (d) d'un point de repère fixe O, suivant une ligne d'approche passant par P et O, et comprenant un dispositif de reflexion optique (34) placé sur la ligne d'approche et formant dans l'oeil du pilote l'image d'un point de repère (21) placé sur l'avion, appareil caractérisé par le fait qu'il comprend une glace semi-transparente (33) dont le centre est le point O interposée sur le trajet des rayons lumineux allant de l'oeil du pilote au dispositif de réflexion (31) et faisant un angle de 45° avec le plan vertical passant par la ligne d'approche et un miroir plane (32) ant dans l'oeil du pilote une deuxième image du point de repère (21) de l'avion (2) après réflexion du rayons lumineux sur ledit miroir plan (32), la glace semi-transparente (33) et le dispositif de réflexion (31), le miroir plane (32) faisant avec la glace semi-transparente (33) un angle A tel que les deux images du point de repère (21) soient confondues lorsque le point de repère (21) se trouve à la verticale du point de stationnement P.

2. Appareil de contrôle de positionnement selon la revendication 1, caractérisé par le fait que le miroir plan (33) est monté orientable autour d'un axe perpendiculaire au plan de déplacement du pilote et est associé à un dispositif d'orientation (35) permettant, par variation de l'angle (A), de régler la distance (d) du point de stationnement fixé (P) au point de repérage (O).

3. Appareil de contrôle de positionnement selon la revendication 1, caractérisé par le fait que le dispositif de réflexion est un miroir plan (31) faisant un angle de 45° avec la face réfléchissante de la glace semi-transparente (33).

4. Appareil de contrôle de positionnement selon la revendication 1, caractérisé par le fait que le dispositif de réflexion est un dièdre à 90° formant un invariant optique et dont l'arête (310) est parallèle au plan de déplacement du pilote et fait un angle de 45° avec la face réfléchissante de la glace semi-transparente (33).

5. Appareil de contrôle de positionnement selon l'une des revendications 1 à 4, caractérisé par le fait qu'un filtre coloré (34) est placé sur le trajet des rayons allant du miroir orientable (32) à la glace semi-transparente (33).

6. Appareil de contrôle de positionnement selon l'une des revendications 1 à 4, caractérisé par le fait que le miroir orientable (32) est très légèrement incliné par rapport à la perpendiculaire au plan de déplacement du mobile.

7. Appareil de contrôle de positionnement selon l'une des revendications précédentes, caractérisé par le fait qu'un repère placé sur le dispositif de réflexion (31) permet le guidage suivant une trajectoire rectiligne du déplacement du pilote.

**Patentansprüche**

1. Vorrichtung zur Kontrolle der Positionierung eines Luftfahrzeuges in einer Ebene in einem Stationierungspunkt (P), der in einem Abstand (d) von einem fixen Markierungspunkt (O) gelegen ist, entlang einer Annäherungslinie, die durch P und O verläuft, mit einer optischen Reflexionseinrichtung (31), die auf der Annäherungslinie gelegen ist und im Auge des Piloten das Bild eines Markierungspunktes (21) ergibt, der sich auf dem Luftfahrzeug befindet, dadurch gekennzeichnet, daß die Vorrichtung eine halbtransparente Glasscheibe (33), deren Mittelpunkt der Punkt O ist, welcher in der Bahn der Lichtstrahlen vom Auge des Piloten bis zur Reflexionseinrichtung (31) zwischengelagert ist und einen Winkel von 45° mit der vertikalen Ebene einschließt, die durch die Annäherungslinie verläuft, und einem ebenen Spiegel (32) aufweist, der im Auge des Piloten ein zweites Bild des Markierungspunktes (21) des Luftfahrzeuges (2) nach Reflexion der Lichtstrahlen auf dem ebenen Spiegel (32), der halbtransparenten Glasscheibe (33) und der Reflexionseinrichtung (31) zeigt, und daß der ebene Spiegel (32) mit der halbtransparenten Glasscheibe (33) einen Winkel A von einem solchen Wert einschließt, daß die beiden Bilder des Markierungspunktes (21) zusammenfallen, wenn sich der Markierungspunkt (21) in der Vertikalen des Stationierungspunktes (P) befindet.

2. Vorrichtung nach Anspruch 1, dadurch gekennzeichnet, daß der ebene Spiegel (32) ausrichtbar um eine zur Verschiebungsebene des Piloten lotrechte Achse montiert und einer Orientierungseinrichtung (35) zugeordnet ist, die durch Veränderung des Winkels (A) eine Regelung des Abstandes (d) vom fixen Stationierungspunkt (P) zum Markierungspunkt (O) zuläßt.

3. Vorrichtung nach Anspruch 1, dadurch gekennzeichnet, daß die Reflexionseinrichtung ein ebener bzw. planer Spiegel (31) ist, der einen Winkel von 45° mit der Reflexionsfläche des halbtransparenten Glases (33) bildet.

4. Vorrichtung nach Anspruch 1, dadurch gekennzeichnet, daß die Reflexionseinrichtung eine Dieder von 90° ist, der eine optische Invariante darstellt und dessen Kante (310) parallel zur Verschiebungsebene des Piloten verläuft und einen Winkel von 45° mit der Reflexionsfläche der halbtransparenten Glasscheibe (33) bildet.

5. Vorrichtung nach einem der Ansprüche 1 bis 4, dadurch·gekennzeichnet, daß ein farbiger Filter (34) in der Bahn der Lichstrahlen angeordnet ist, die vom ausrichtbaren Spiegel (32) zur halbtransparenten Glasscheibe (33) verlaufen.

6. Vorrichtung nach einem der Ansprüche 1 bis 4, dadurch gekennzeichnet, daß der ausrichtbare Spiegel (32) ganz geringfügig in bezug auf die Lotrechte zur Verschiebungsebene der mobilen Einrichtung geneigt ist.

7. Vorrichtung nach einem der vorhergehenden Ansprüche, dadurch gekennzeichnet, daß eine auf der Reflexionseinrichtung (31) angebrachte Markierung die Leitung bzw. Führung entlang einer geradlinigen Trajektorie bzw. Verschiebungsbahn des Piloten zuläßt.

## Claims

1. Apparatus for monitoring the positioning of an aircraft in a plane at a stationing point situated at a distance (d) from a fixed reference point O, following a line of approach passing through P and O, and comprising an optical reflection device (31) placed on the line of approach and forming in the pilot's eye the image of a reference point (21) placed on the aircraft, the apparatus characterised by the fact that it comprises a semi-transparent mirror (33) with the point O as its centre, interposed in the path of the beams of light travelling from the pilot's eye to the reflecting device (31) and forming an angle of 45° with the vertical plane passing through the line of approach and a plane mirror (32) forming in the pilot's eye a second image of the reference point (21) of the aircraft (2) after reflection of the beams of light at the said plane mirror (32), the semi-transparent mirror (33) and the reflecting device (31), the plane mirror (32) forming with the semi-transparent mirror (33) an angle A such that the two images of the reference point (21) coincide when the reference point (21) is vertical in the respect of the stationing point P.

2. Apparatus for monitoring the positioning according to Claim 1, characterised in that the plane mirror (33) is mounted in a swivelling manner around an axis perpendicular to the plane of movement of the pilot and is combined with a directing device (35) permitting, by varying the angle (A), the regulation of the distance (d) from the fixed stationing point (P) to the reference point (O).

3. Apparatus for monitoring positioning according to Claim 1, characterised in that the reflecting device is a plane mirror (31) forming an angle of 35° with the reflecting face of the semi-transparent mirror (33).

4. Apparatus for monitoring positioning according to Claim 1, characterised in that the reflecting device is a 90° dihedron forming an optical invariant and whose edge (310) is parallel to the plane of movement of the pilot and forms an angle of 45° with the reflecting face of the semi-transparent mirror (33).

5. Apparatus for monitoring positioning according to one of Claims 1 to 4, characterised in that a coloured filter (34) is placed in the path of the rays travelling from the swivelling mirror (32) to the semi-transparent mirror (33).

6. Apparatus for monitoring positioning according to one of Claims 1 to 4, characterised in that the swivelling mirror (32) is very slightly inclined relative to the perpendicular to the plane of movement of the moving body.

7. Apparatus for monitoring positioning according to one of the preceding claims, characterised in that a reference mark placed on the reflecting device (31) permits the guiding of the pilot's movement along a straight-line trajectory.

Fig 1

310 31 32 1 3 0 33 11 21 2

0 036 803

Fig 2

Fig 3

Fig 4